# FASCICULE DE BREVET EUROPEEN

(11) **EP 0 495 734 B1**
(45) Date de publication et mention de la délivrance du brevet: **14.12.1994**
(21) Numéro de dépôt: 92420017.3
(22) Date de dépôt: 14.01.1992
(51) Int. Cl.: B65D 83/64, B32B 27/08

(54) **Piston coulissant pour distributeur**
Spenderkolben
Dispenser piston

(30) Priorité: 16.01.1991 FR 9100648
(43) Date de publication de la demande: 22.07.1992
(73) Titulaire: CEBAL S.A., F-92115 Clichy (FR)
(72) Inventeur: Brugerolle, Pierre, F-51800 Sainte Menehould (FR); Jupin, Alain, F-51800 Sainte Menehould (FR)
(74) Mandataire: Mougeot, Jean-Claude

(56) Documents cités:
- EP-A- 0 128 773
- EP-A- 0 204 324
- FR-A- 1 070 728
- FR-A- 1 395 593
- FR-A- 2 301 306
- FR-A- 2 354 942
- US-A- 3 362 589

## Description

La présente invention concerne un piston coulissant destiné à séparer un milieu en surpression relative par rapport à un produit, et un tel produit contenu dans le corps d'un distributeur correspondant respectivement au préambule de chacune des revendications 1 et 2. Il peut ainsi séparer de l'air ambiant d'un produit liquide ou pâteux dans lequel la distribution crée une dépression, ou encore séparer un fluide en surpression dit propulseur d'un produit liquide et/ou gazeux à distribuer.

On connaît par le brevet US-A-3362589 un piston coulissant prévu pour séparer un milieu en surpression relative et un produit contenu dans le corps d'un distributeur, ledit piston comprenant un élément de séparation dudit milieu et dudit produit, ledit élément étant en forme de cuvette ayant une extrémité ouverte, ainsi que un ou plusieurs anneaux de guidage et de coulissement étanche dudit piston dans ledit corps, le ou lesdits anneau(x) ceinturant l'élément, ayant une zone d'appui périphérique contre ledit corps et étant en matière élastique, selon le préambule de la revendication 1. Ce piston a un seul tel anneau, qui est le recouvrement en composé ("compound") du type caoutchouc synthétique d'une lèvre périphérique inclinée de l'élément qui est en contact avec la surface intérieure du corps de distributeur. Ce recouvrement agit comme un agent d'étanchéité séparant le produit et le propulseur en surpression. Ce recouvrement est délicat à réaliser et le guidage du piston qu'il réalise avec ladite lèvre périphérique est un centrage local du piston.

On connaît par ailleurs par le document EP-A-0128773 un piston coulissant consistant en un élément en forme de cuvette qui est formé à partir d'une ébauche polymérique multicouche comprenant une couche à effet barrière vis-à-vis de l'azote, ledit élément étant ainsi à effet barrière sur toute son étendue. Cette couche barrière est en "nitrile polymer", elle est comprise entre des couches externes et a de préférence une épaisseur au moins égale à 3 fois l'épaisseur de chaque couche externe. Ce piston thermoformé et utilisé dans le cas de produits cosmétiques a une jupe cylindrique ayant un jeu radial "aussi faible que 0,013 mm" par rapport au corps du distributeur.

Cette jupe cylindrique assure à elle seule le guidage du piston et l'étanchéité vis-à-vis du propulseur, sa précision rend le piston difficile à réaliser.

On connaît aussi par le document FR-A-1070728 un piston coulissant prévu pour séparer un milieu en surpression relative et un produit contenu dans le corps d'un distributeur, ledit piston comprenant un élément de séparation dudit milieu et dudit produit, ledit élément étant en forme de cuvette ayant une extrémité ouverte, ainsi que un anneau de guidage et de coulissement étanche dudit piston dans le corps, ledit anneau ceinturant l'élément, ayant deux zones d'appui périphérique contre ledit corps et étant en matière élastique, l'anneau étant une pièce élastique distincte dudit élément et tendue autour de cet élément, lesdites zones d'appui périphérique de l'anneau étant espacées axialement d'au moins 1/8 du diamètre extérieur de ladite extrémité ouverte de l'élément, ledit élément étant entièrement en retrait par rapport auxdites zones d'appui, ledit anneau étant ainsi le seul moyen de guidage et de coulissement étanche du piston et permettant un réglage facile dudit guidage et dudit coulissement, selon le préambule de la revendication 1. Ce piston est utilisé dans un tube destiné à contenir de l'encre ou analogue, et il est fait d'un élément creux en aluminium à paroi latérale cylindrique autour de laquelle est agencé un manchon de râclage en matière élastique muni de deux bords extérieurs périphériques espacés réalisant ce râclage et l'étanchéité avec la paroi intérieure du tube.

On connaît également par le document FR-A-2301306 un piston coulissant prévu pour séparer un milieu en surpression relative et un produit contenu dans le corps d'un distributeur, ledit piston comprenant un élément de séparation dudit milieu et dudit produit, ledit élément étant en forme de cuvette ayant une extrémité ouverte ainsi que deux anneaux de guidage et de coulissement étanche dudit piston dans ledit corps, lesdits anneaux ceinturant l'élément et ayant une zone d'appui périphérique contre ledit corps chaque anneau étant une pièce distincte dudit élément et tendue autour de cet élément, lesdites zones d'appui périphérique des anneaux comprenant au moins deux zones espacées axialement d'au moins 1/8 du diamètre extérieur de ladite extrémité ouverte de l'élément, selon le préambule de la revendication 2. Ce piston coulissant est utilisé dans une seringue à air comprimé pour refouler du matériau emballé dans un sac en matière plastique.
Le piston comporte deux anneaux montés chacun dans une rainure annulaire du piston et agissant chacun par une lèvre annulaire qui s'applique contre la paroi intérieure du corps de la seringue. La lèvre en matière plastique du premier anneau est pointue et sert à refouler la feuille d'emballage du matériau.
La lèvre périphérique du second anneau est flexible et empêche les fuites d'air entre le piston et le corps, elle coulisse de façon étanche dans ce corps. Une rainure intermédiaire du piston est remplie d'huile qui lubrifie la paroi et facilite le dégagement de la feuille d'emballage. Ce piston a une structure compliquée et, comme celui du premier document cité, ne comporte pas de moyen barrière empêchant les échanges de produits gazeux ou volatils entre le gaz sous pression et le produit.

La demanderesse a cherché à réaliser un piston coulissant assurant un bon guidage, facile à fabriquer et ayant des moyens barrière efficaces vis-à-vis de l'oxygène.

### EXPOSE DE L'INVENTION

L'invention a pour premier objet un piston coulissant tel qu'il est connu par le document FR-A-1070728, caractérisé en ce que les zones d'appui des anneaux sont bombées, et en ce que ledit élément est formé à partir d'une ébauche polymérique multicouche comprenant au moins une couche à effet barrière vis-à-vis de l'oxygène, ledit élément étant ainsi à effet barrière sur toute son étendue.

L'invention a pour deuxième objet un piston coulissant tel qu'il est connu par FR-A-2301306, caractérisé en ce que les anneaux sont en matière élastique et ont des zones d'appui bombées, et en ce que ledit élément est entièrement en retrait par rapport auxdites zones d'appui, lesdits anneaux étant ainsi les seuls moyens de guidage et de coulissement étanche du piston, et permettant un réglage facile dudit guidage et dudit coulissement, et en ce que ledit élément est formé à partir d'une ébauche polymérique multicouche comprenant au moins une couche à effet barrière vis-à-vis de l'oxygène, ledit élément étant ainsi à effet barrière sur toute son étendue.

La structure des pistons coulissants de l'invention est ainsi bien simplifiée : elle comprend d'une part un élément de séparation multicouche polymérique en forme de cuvette, ce qui permet l'inclusion dans cet élément des moyens barrière et leur extension à toute la surface de l'élément, et elle comprend d'autre part un ou plusieurs anneaux élastiques de dimensions choisies pour jouer un double rôle de guidage et d'étanchéité ou coulissement étanche dans le corps de distributeur. La forme de cuvette de l'élément de séparation permet de tendre et de retenir le ou les anneaux élastiques, leur élasticité permettant une mise en place facile et une bonne étanchéité.

L'élément ne comporte pas de lèvre saillante d'étanchéité, ce qui simplifie son formage, typiquement un thermoformage à plus de 120°C. L'élément, donc son ébauche, comprend deux couches externes inertes chimiquement respectivement vis-à-vis dudit milieu en surpression et vis-à-vis dudit produit contenu dans le distributeur.

Quant à sa ou ses couche(s) interne(s) à effet barrière, elle est ou elles sont de préférence en l'une ou plusieurs des matières du groupe formé par : PVDC (polychlorure de vinylidène), EVOH, PAN, PVDF (polyfluorure de vinylidène), le saran (copolymère de chlorure de vinyle et de chlorure de vinylidène), le MXD6 (métaxylènediamine 6). La présentation en couche(s) unique ou successives permet d'obtenir l'effet barrière sur toute l'étendue de l'élément séparateur, elle permet aussi d'adapter les choix et les épaisseurs de couches barrière selon l'effe recherché. Pour un élément d'épaisseur finale 0,6 à 1,2 mm, on a ainsi typiquement une ou plusieurs couches barrière ayant ensemble une épaisseur de 10 à 40 micromètres.

D'une façon différente ou complémentaire, la ou les couches internes à effet barrière peuvent comprendre au moins un dépôt de produit inorganique du type SiOx (x supérieur à 1) sur une couche intermédiaire. On peut aussi incorporer dans une ou plusieurs couches externes ou internes des moyens lamellaires, par exemple des charges minérales telles que du mica, ralentissant les diffusions gazeuses.

Pour faciliter la mise en place du ou des anneaux élastiques de guidage et d'étanchéité et leur retenue sur l'élément de séparation, cet élément en forme de cuvette a de préférence une surface latérale tronconique, inclinée habituellement de 0,5 à 10° sur l'axe longitudinal du piston, cette surface latérale s'élargissant en allant vers l'extrémité ouverte de l'élément. Son épaisseur est habituellement comprise entre 0,5 et 1,3 mm.

L'élément lui-même a du jeu par rapport au corps du distributeur, ce jeu est de préférence de moins de 1 mm au diamètre, pour que l'effet barrière s'étende à presque toute la section intérieure du corps cylindrique. Il est avantageux d'avoir, et facile d'obtenir par thermoformage, une collerette extérieure transversale à l'extrémité ouverte de l'élément, cette collerette éloignant la surface latérale tronconique du corps cylindrique et permettant d'utiliser des anneaux élastiques de guidage et d'étanchéité plus épais, et jouant également un rôle de retenue de sécurité de ces anneaux.

De façon à avoir un bon guidage du piston dans le corps du distributeur, le ou les anneaux élastiques comporte(nt) deux zones d'appui périphériques espacées axialement d'au moins 1/8 et de préférence 1/5 du diamètre extérieur de l'extrémité ouverte de l'élément de séparation. En pratique, il est encore préférable que cet espacement ou écartement soit compris entre 10 et 30 mm. Cela est réalisé typiquement en utilisant soit un anneau élastique profilé à deux zones d'appui périphériques, soit deux anneaux élastiques distincts. Pour avoir un guidage et une étanchéité encore plus sûre, on préfère avoir un élément à surface latérale cylindrique ou tronconique creusée de deux rainures périphériques dans lesquelles s'encastrent respectivement deux anneaux élastiques, ceux-ci comportant de préférence chacun deux portions annulaires bombées s'appuyant de façon étanche contre le corps du distributeur.

### AVANTAGES

- La structure de l'élément de séparation, sans reliefs périphériques de guidage et de coulissement étanche, est plus facile à fabriquer.
- Elle permet d'utiliser une ébauche polymérique multicouche à couche(s) barrière.
- Le thermoformage en est facile, grâce à l'absence des reliefs précédents.
- Les moyens d'étanchéité et de guidage sont les mêmes, ils sont rapportés sur l'élément de séparation et facilement réglables, ils permettent des réglages faciles du guidage et du coulissement étanche du piston.

### EXEMPLES

La figure 1 représente l'ébauche multicouche de l'élément de séparation du piston de l'invention, en section droite.

La figure 2 représente l'élément formé, en coupe axiale.

La figure 3 représente cet élément en vue de dessous.

La figure 4 représente le piston coulissant de l'invention, muni d'un anneau élastique profilé, en demi-coupe axiale.

La figure 5 représente le piston de l'invention, muni de deux anneaux élastiques, également en demi-coupe axiale.

La figure 6 représente un autre piston selon l'invention, son élément de séparation comportant des rainures d'encastrement des anneaux élastiques, en demi-coupe axiale.

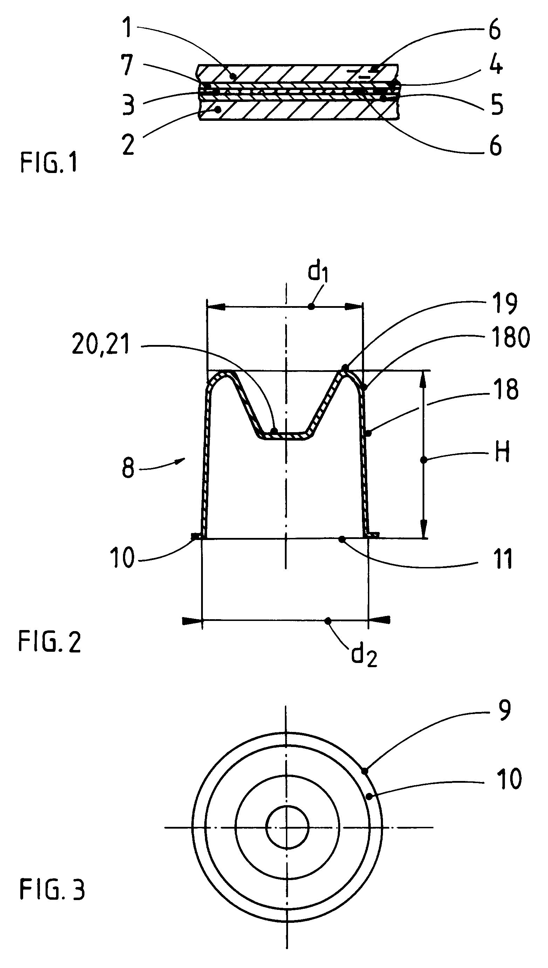

On a utilisé une ébauche polymérique multicouche d'épaisseur 2 mm comprenant (fig. 1) :
- 2 couches externes 1 et 2 en PE-HD, chacune d'épaisseur 0,9 mm
- 1 couche interne barrière 3 d'épaisseur 0,050 mm en EVOH
- 2 couches de liaison 4 et 5 en EAA, chacune d'épaisseur 0,075 mm, assurant l'adhérence des couches externes 1 et 2 à la couche centrale 3.

Sur la figure 1 figurent aussi des variantes en représentation partielle : mica lamellaire 6 inclus dans une couche externe 1 ou dans la couche barrière 3, dépôt 7 de SiO₂ sur une face de la couche 3. Ces variantes ne sont pas employées dans le présent essai.

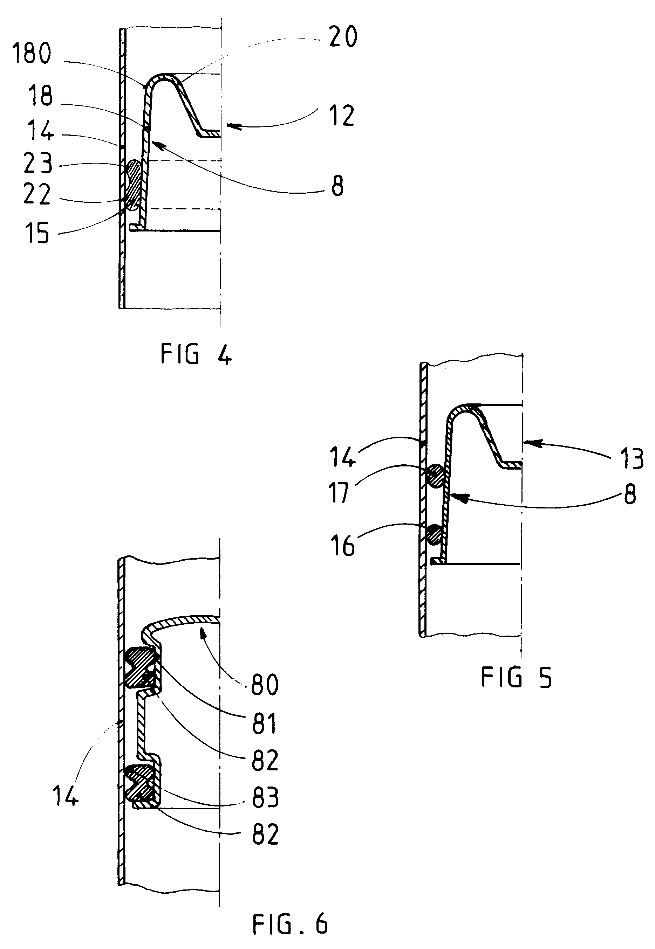

On a obtenu par thermoformage à 140°C dans une matrice à échappement plusieurs éléments 8 d'épaisseur moyenne 0,6 mm dont l'un 8 est représenté sur les figures 2 et 3. Il a une hauteur H de 40 mm et un diamètre hors-tout, ou diamètre extérieur 9 de la collerette extérieure 10 de son extrémité ouverte 11, de 44,8 mm. Le piston 12 ou 13 comprenant cet élément 8 est destiné à un corps cylindrique 14 de distributeur de diamètre intérieur 45 mm (figures 4 et 5). On pourrait aussi s'en servir pour un diamètre intérieur légèrement différent, par exemple 45,5 mm ou 46 mm, en l'équipant de moyens de guidage et de coulissement étanche du même type que 15 et 16, 17 mais un peu plus épais.

L'élément 8 a une surface latérale tronconique 18 débutant 5 mm en-dessous de son sommet annulaire 19, cette surface 18 ayant un diamètre de début d1 de 38 mm et un diamètre d'extrémité inférieur d2 au niveau de la collerette 10, de 40 mm. Le fond 20 de l'élément 8 comporte un creux central 21 destiné à l'emboîtement d'une valve ou d'une pompe du distributeur en fin de course du piston 8+15 ou 8+16 et 17. Le thermoformage permet d'obtenir directement cette géométrie, la couche barrière 3 restant présente dans tout l'élément 8.

Selon la figure 4, un élément 8 est équipé d'un anneau élastique profilé 15 en élastomère ayant au repos un diamètre intérieur de 39 mm. Cet anneau 15 porte deux zones transversalement arrondies en relief 22 et 23, de sommets écartés initialement de 8 mm et de diamètres respectifs 44 et 44,5 mm. Cet anneau 15 est engagé librement autour de l'élément 8 et du début 180 de sa surface tronconique 18, il commence à forcer à 9 mm de ce début et on le repousse encore de 3 mm pour qu'il soit correctement maintenu sur l'élément 8. Ensuite, il est engagé dans le corps rigide 14 par l'extrémité inférieure ouverte de ce corps, le fond 20 de l'élément 8 étant orienté vers le haut. Le corps 14 et la paroi tronconique 18 de l'élément 8 forment entre eux un coin annulaire, dans lequel l'anneau 15 est repoussé préalablement ou par l'utilisation du distributeur jusqu'à établir un double contact de ses sommets annulaires 22 et 23 avec le corps 14. L'anneau 15 acquiert alors une position stable par rapport à l'élément 8, cette stabilité étant ici améliorée par la déformabilité élastique de la paroi tronconique 18. L'écartement 8 à 8,5 mm des deux zones d'appui 22 et 23 fournit un très bon guidage du piston 12 dans le corps 4, avec un glissement facile et une très bonne étanchéité.

Sur la figure 5, les moyens de guidage et de coulissement étanche sont deux joints toriques en élastomère 16 et 17 de section radiale circulaire, de diamètre intérieur au repos 38,5 mm et de diamètres extérieurs au repos respectivement 43,5 et 44,5 mm. La mise en place de ces deux joints 16 puis 17 autour d'un élément 8 est faite de façon analogue à celle de l'anneau 15 de la figure 4. L'écartement des zones d'appui des joints 16 et 17 pendant l'utilisation du distributeur résulte d'un équilibre établi par la poussée ou la remontée du piston 13 dans le corps 4, il est de 18 mm.

L'élément 80 de la figure 6 a été obtenu par thermoformage à partir de la même ébauche que les éléments 8 des figures 1 à 5. Il comporte sur sa surface latérale deux rainures circulaires telles que 81 dans lesquelles s'encastrent à moitié avec un jeu latéral faible deux joints annulaires 82 en élastomère, leurs parties émergeant de ces rainures 81 permettant un excellent guidage d'introduction et d'utilisation du piston. Chaque joint 82 comporte deux portions annulaires bombées 83 assurant mieux l'étanchéité en cas de léger basculement du joint. Cette solution donne des résultats particulièrement sûrs et constants en fabrication de série et en utilisation.
On remarque que l'utilisation de deux joints annulaires permet non seulement de s'adapter à des diamètres intérieurs de corps légèrement différents, mais aussi de régler la distance des appuis ou écartement de guidage du piston.

### APPLICATION INDUSTRIELLE

Le piston coulissant de l'invention s'applique à tout distributeur dans lequel un tel piston remonte sous l'effet d'une différence de pression entre ses deux faces. Il s'agit notamment de distributeurs sous pression, ou de distributeurs de produit liquide ou crémeux, ou de produit pâteux, équipés d'un système de pompage.

## Revendications

1. Piston coulissant (12) prévu pour séparer un milieu en surpression relative et un produit contenu dans le corps (14) d'un distributeur, ledit piston (12) comprenant un élément de séparation (8) dudit milieu et dudit produit, ledit élément (8) étant en forme de cuvette ayant une extrémité ouverte (11), ainsi qu'un anneau de guidage et de coulissement étanche (15) dudit piston (12) dans le corps (14), ledit anneau ceinturant l'élément, ayant deux zones d'appui périphérique (22,23) contre ledit corps (14) et étant en matière élastique, l'anneau (15) étant une pièce élastique distincte dudit élément (8) et tendue autour de cet élément (8), lesdites zones d'appui périphérique (22,23) de l'anneau (15) étant espacées axialement d'au moins 1/8 du diamètre extérieur de ladite extrémité ouverte (11) de l'élément (8), ledit élément (8) étant entièrement en retrait par rapport auxdites zones d'appui (22,23), ledit anneau (15) étant ainsi le seul moyen de guidage et de coulissement étanche du piston (12) et permettant un réglage facile dudit guidage et dudit coulissement, caractérisé en ce que les zones d'appui (22,23) sont bombées, et en ce que ledit élément (8) est formé à partir d'une ébauche polymérique multicouche comprenant au moins une couche (3) à effet barrière vis-à-vis de l'oxygène, ledit élément (8) étant ainsi à effet barrière sur toute son étendue.

2. Piston coulissant (13) prévu pour séparer un milieu en surpression relative et un produit contenu dans le corps (14) d'un distributeur, ledit piston (13) comprenant un élément de séparation (8) dudit milieu et dudit produit, ledit élément (8) étant en forme de cuvette ayant une extrémité ouverte (11) ainsi que deux anneaux de guidage et de coulissement étanche (16 et 17;82) dudit piston (13) dans ledit corps (14), lesdits anneaux ceinturant l'élément et ayant une zone d'appui périphérique contre ledit corps (14) chaque anneau (16; 17; 82) étant une pièce distincte dudit élément (8) et tendue autour de cet élément (8), lesdites zones d'appui périphérique (16,17; 83) des anneaux (16;17; 82) comprenant au moins deux zones espacées axialement d'au moins 1/8 du diamètre extérieur de ladite extrémité ouverte (11) de l'élément (8), caractérisé en ce que les anneaux sont en matière élastique et ont des zones d'appui bombées, et en ce que ledit élément (8) est entièrement en retrait par rapport auxdites zones d'appui (16,17;82), lesdits anneaux (16,17;82) étant ainsi les seuls moyens de guidage et de coulissement étanche du piston (13) et permettant un réglage facile dudit guidage et dudit coulissement, et en ce que ledit élément (8) est formé à partir d'une ébauche polymérique multicouche comprenant au moins une couche (3) à effet barrière vis-à-vis de l'oxygène, ledit élément (8) étant ainsi à effet barrière sur toute son étendue.

3. Piston selon la revendication 2, dans lequel le ou lesdits anneaux élastiques consistent soit en un anneau (15;82) profilé à 2 zones d'appui périphérique (22 et 23; 83) soit en deux anneaux distincts (16,17).

4. Piston selon la revendication 3, dans lequel ledit élément (80) a une surface latérale cylindrique ou tronconique creusée de deux rainures périphériques (81) espacées dans lesquelles s'encastrent lesdits anneaux élastiques (82), ceux-ci comportant de préférence chacun deux portions annulaires bombées (83) s'appuyant de façon étanche contre ledit corps (14) dudit distributeur.

5. Piston (12;13) selon l'une quelconque des revendications 1 ou 2, dans lequel ledit élément (8) comprend deux couches externes (1, 2) inertes chimiquement respectivement vis-à-vis dudit milieu en surpression et vis-à-vis dudit produit contenu dans le distributeur, et dans lequel sa ou ses couches à effet barrière (3) est ou sont intermédiaires et en l'une ou plusieurs des matières du groupe formé par : PVDC, EVOH, PAN, PVDF, saran, MXD6.

6. Piston (12;13) selon la revendication 5, dans lequel ledit élément (8) a une épaisseur de 0,6 à 1,2 mm, sa ou ses couches à effet barrière (3) ayant ensemble une épaisseur de 10 à 40 micromètres.

7. Piston (12;13) selon la revendication 5, dans lequel la ou lesdites couches internes à effet barrière (3) comprend ou comprennent au moins un dépôt (7) de produit inorganique du type SiOx sur une couche intermédiaire, x étant supérieur à 1.

8. Piston (12;13) selon l'une quelconque des revendications 1 à 5, dans lequel ledit élément comprend dans au moins une de ses couches (1,3) des moyens lamellaires (6) ralentissant les diffusions gazeuses.

9. Piston (12;13) selon l'une quelconque des revendication 1 à 8, dans lequel ledit élément en forme de cuvette (8) a une surface latérale tronconique (18) inclinée de 0,5 à 10° sur l'axe longitudinal dudit piston (12;13), ladite surface latéale (18) s'élargissant en allant vers l'extrémité ouverte (11) de cet élément.

10. Ensemble du corps (14) de distributeur et du piston (12:13) selon l'une quelconque des revendications 1 à 8, dans lequel l'extrémité ouverte (11) dudit élément (8) a un diamètre extérieur inférieur d'au plus 1 mm au diamètre intérieur du corps (14) qui est cylindrique.

11. Ensemble selon la revendication 10, dans lequel ladite extrémité ouverte (11) dudit élément (8) comporte une collerette (10) extérieure transversale périphérique.

12. Utilisation du piston coulissant (12,13) de l'une quelconque des revendications 1 à 9 dans le corps d'un distributeur de produit liquide ou pâteux, le piston y séparant de l'air ambiant ledit produit dans lequel chaque distribution créée une dépression.

## Claims

1. A sliding piston (12) provided for separating a medium which is at a relative over-pressure and a product contained within the body (14) of a dispenser, the said piston (12 ) comprising an element (8) for separating the said medium and the said product, the said element (8) being in the form of a cup having one open end (11), as well as a ring for the guidance and sealing-tight sliding (15) of the said piston (12) in the body (14), the said ring surrounding the element, having two peripheral zones (22, 23) adapted to bear against the said body (14) and being of an elastic material, the ring (15) being an elastic member distinct from the said element (8) and being stretched about this element (8), the said peripheral bearing zones (22, 23) of the ring (15) being spaced apart axially by at least one-eighth the outside diameter of the said open end (11) of the element (8), the said element (8) being entirely set back in relation to the said bearing Zones (22, 23), the said ring (15) thus being the sole means of guidance and Of providing sealing-tight sliding of the piston (12) and permitting easy adjustment of the said guidance and of the said sliding action, characterised in that the bearing zones (22, 23) are convex and in that the said element (8) is formed from a multi-layer polymeric blank comprising at least one layer (3) having a barrier effect in respect of oxygen, the said element (8) thus having a barrier effect over its entire extent.

2. A sliding piston (13) provided for separating a medium which is at a relative over-pressure and a product contained within the body (14) of a dispenser, the said piston (13) comprising an element (8) for separating the said medium and the said product, the said element (8) being in the form of a cup having one open end (11) and also two rings for guidance and sealing-tight sliding (16 and 17; 82) of the said piston (13) in the said body (14), the said rings enclosing the element and having a peripheral zone adapted to bear against the said body (14), each ring (16, 17; 82) being a member distinct from the said element (8) and stretched about this element (8), the said peripheral bearing zones (16, 17; 83) of the rings (16, 17; 82) comprising at least two zones which are spaced apart axially by at least one-eighth the outside diameter of the said open end (11) of the element (8), characterised in that the rings are of elastic material and have convex bearing zones and in that the said element (8) is entirely set back in relation to the said bearing zones (16, 17; 82), the said rings (16, 17; 82) thus being the sole means of guidance and sealing-tight sliding of the piston (13) and permitting easy adjustment of the said guidance and of the said sliding action, and in that the said element (8) is formed from a multi-layer polymeric blank comprising at least one layer (3) having a barrier effect in respect of oxygen, the said element (8) thus having a barrier effect over its entire extent.

3. A piston according to claim 3 in which the said elastic ring or rings consist(s) either of a profiled ring (15; 82) having two peripheral bearing zones (22 and 23; 83) or of two distinct rings (16, 17).

4. A piston according to claim 3, in which the said element (80) has a lateral cylindrical or frustoconical surface in which there are two peripheral grooves (81) in which fit the said elastic rings (82), these latter preferably each comprising two convex annular portions (83) bearing in sealing-tight manner against the said body (14) of the said dispenser.

5. A piston (12, 13) according to any one of claims 1 or 2, in which the said element (8) comprises two outer layers (1, 2) which are chemically inert respectively vis-a-vis the said medium which is at over-pressure and vis-a-vis the product contained in the dispenser and in which its barrier effect layer or layers (3)is or are intermediate and are of one or more of the materials of the group formed by: PVDC, EVOH, PAN, PVDF, Saran, MXD6.

6. A piston (12, 13) according to claim 5 in which the said element (8) has a thickness of 0.6 to 1.2 mm, its barrier effect layer or layers (3) jointly having a thickness of 10 to 40 micrometers.

7. A piston (12, 13) according to claim 5 in which the said barrier effect inner layer or layers (3) comprises or comprise at least one deposit (7) of an inorganic product of the SiOx type on an intermediate layer, x being greater than 1.

8. A piston (12, 13) according to any one of claims 1 to 5, in which the said element comprises in at least one of its layers (1, 3) lamellar means (6) which retard gaseous diffusion.

9. A piston (12, 13) according to any one of claims 1 to 8, in which the said cup-shaped element (8) has a frustoconical lateral surface (18) inclined by 0.5 to 10° to the longitudinal axis of the said piston (12, 13), the said lateral surface (18) widening out with increasing proximity to the open end (11) of this element.

10. An assembly comprising the dispenser body (14) and a piston (12, 13) according to any one of claims 1 to 8, in which the open end (11) of the said element (8) has an outside diameter less by not more than 1 mm than the inside diameter of the body (14) which is cylindrical.

11. An assembly according to claim 10, in which the said open end (11) of the said element (8) comprises a peripheral transverse outer collar (11).

12. Use of the sliding piston (12, 13) according to any one of claims 1 to 9 in the body of a dispenser of liquid or pasty product, the piston therein separating from the ambient air the said product in which each action of the dispenser creates a negative pressure.

## Patentansprüche

1. Gleitbeweglicher Kolben (12) zum Trennen eines unter relativem Überdruck stehenden Mediums von einem im Körper (14) eines Spenders enthaltenen Stoff, mit einem Trennelement (8) zum Trennen des Mediums von dem Stoff, das napfförmig ausgebildet ist und ein offenes Ende (11) hat, sowie einen Ring (15) für die dichte Führung und Gleitbewegung des Kolbens (12) in dem Körper (14), wobei der Ring das Element umschließt, zwei umlaufende Abschnitte (22, 23) zum Andrücken gegen den Körper (14) hat und aus elastischem Material besteht, wobei der Ring (15) ein elastisches Teil ist, das vom Element (8) getrennt und um dieses Element (8) gespannt ist, wobei die umlaufenden Andrückabschnitte (22, 23) des Rings (15) axial mit wenigstens einem Achtel des Außendurchmessers des offenen Endes (11) des Elements (8) beabstandet sind, wobei das Element (8) vollständig hinter die Andrückabschnitte (22, 23) zurückspringt, wodurch der Ring (15) das einzige Mittel für die dichte Führung und Gleitbewegung des Kolbens (12) ist und eine einfache Einstellung der Führung und der Gleitbewegung ermöglicht,
**dadurch gekennzeichnet,** daß
die Andrückabschnitte (22, 23) vorgewölbt sind und daß das Element (8) aus einem mehrschichtigen Polymerrohling gebildet ist, der wenigstens eine Schicht (3) mit Sperrwirkung für Sauerstoff umfaßt, wodurch das Element (8) eine Sperrwirkung auf seiner gesamten Ausdehnung hat.

2. Gleitbeweglicher Kolben (13) zum Trennen eines unter relativem Überdruck stehenden Mediums von einem im Körper (14) eines Spenders enthaltenen Stoff, mit einem Trennelement (8) zum Trennen des Mediums von dem Stoff, das napfförmig ausgebildet ist und ein offenes Ende (11) hat sowie zwei Ringen (16 und 17; 82) für die dichte Führung und Gleitbewegung des Kolbens (13) in dem Körper (14), wobei die Ringe das Element umschließen und einen umlaufenden Andrückabschnitt zum Andrükken gegen den Körper (14) haben, wobei jeder Ring (16; 17; 82) ein vom Element (8) getrenntes und um dieses Element (8) gespannten Teil ist, wobei die umlaufenden Andrückabschnitte (16, 17; 83) der Ringe (16; 17; 82) wenigstens zwei voneinander mit wenigstens einem Achtel des Außendurchmessers des offenen Endes (11) des Elements (8) beabstandete Abschnitte umfassen,
**dadurch gekennzeichnet,** daß
die Ringe aus elastischem Material sind und vorgewölbte Andrückabschnitte haben, und daß das Element (8) vollständig hinter diese Andrückabschnitte (16, 17; 82) zurückspringt, wodurch die Ringe (16, 17; 82) die einzigen Mittel für die dichte Führung und Gleitbewegung des Kolbens (13) sind und eine einfache Regelung der Führung und der Gleitbewegung ermöglichen, und daß das Element (8) aus einem mehrschichtigen Polymerrohling gebildet ist, der wenigstens eine Schicht (3) mit Sperrwirkung für Sauerstoff umfaßt, wodurch das Element (8) Sperrwirkung auf seiner gesamten Ausdehnung hat.

3. Kolben nach Anspruch 2,
dadurch gekennzeichnet, daß
der oder die elastischen Ringe aus einem konturierten Ring (15; 82) mit zwei umlaufenden Andrückabschnitten (22 und 23; 83) oder aus zwei getrennten Ringen (16, 17) bestehen.

4. Kolben nach Anspruch 3,
dadurch gekennzeichnet, daß
das Element (80) eine zylindrische oder kegelförmige Seitenfläche mit zwei eingetieften beabstandeten umlaufenden Rillen (81) hat, in die die elastischen Ringe (82) eingerastet sind, die vorzugsweise jeder zwei vorgewölbte ringförmige Abschnitte (83) aufweisen, die dicht gegen den Körper (14) des Spenders andrücken.

5. Kolben (12; 13) nach einem der Ansprüche 1 bis 2,
dadurch gekennzeichnet, daß
das Element (8) zwei äußere Lagen (1, 2) aufweist, die chemisch inert gegen das unter Überdruck stehende Medium bzw. den im Spender enthaltenen Stoff sind, wobei die Sperrlage oder -lagen (3) zwischen diesen liegen und aus einem Oder mehreren der Materialien aus der von PVDC, EVOH, PAN, PVDF, Saran, MXD6 gebildeten Gruppe bestehen.

6. Kolben (12; 13) nach Anspruch 5,
dadurch gekennzeichnet, daß
das Element (8) eine Dicke von 0,6 bis 1,2 mm hat und daß seine Sperrlage oder -lagen (3) zusammen eine Dicke von 10 bis 40 µm haben.

7. Kolben (12; 13) nach Anspruch 5,
dadurch gekennzeichnet, daß
die innere Sperrlage oder -lagen (3) wenigstens eine Schicht (7) aus anorganischem Material vom Typ SiOx auf einer Zwischenlage umfassen, wobei x größer als 1 ist.

8. Kolben (12; 13) nach einem der Ansprüche 1 bis 5,
dadurch gekennzeichnet, daß
das Element in wenigstens einer seiner Lagen (1, 3) Lamelleneinrichtungen (6) umfaßt, die Gasdiffusion verlangsamen.

9. Kolben (12; 13) nach einem der Ansprüche 1 bis 8,
dadurch gekennzeichnet, daß
das napfförmige Element (8) eine gegen die Längsachse des Kolbens (12; 13) zwischen 0,5 und 10° geneigte kegelförmige Seitenfläche (18) hat, die sich zum offenen Ende (11) des Elements hin erweitert.

10. Vorrichtung aus Spenderkörper (14) und Kolben (12; 13) nach einem der Ansprüche 1 bis 8,
dadurch gekennzeichnet, daß
das offene Ende (11) des Elements (8) einen Außendurchmesser hat, der höchstens 1 mm kleiner ist als der Innendurchmesser des zylindrischen Körpers (14).

11. Vorrichtung nach Anspruch 10,
dadurch gekennzeichnet, daß
das offene Ende (11) des Elements (8) einen transversalen umlaufenden Kragen (10) aufweist.

12. Verwendung des Gleitkolbens (12, 13) nach einem der Ansprüche 1 bis 9 im Körper eines Spenders für flüssige oder pastöse Stoffe,
dadurch gekennzeichnet, daß
der Kolben den Stoff, in dem jeder Spendevorgang einen Unterdruck erzeugt, von der Umgebungsluft trennt.
